# EUROPEAN PATENT SPECIFICATION

(11) **EP 4 467 407 B1**
(45) Date of publication and mention of the grant of the patent: **16.09.2026**
(21) Application number: 24174927.4
(22) Date of filing: 08.05.2024
(51) Int. Cl.: B60W 30/16

(54) **CONTROLLER AND CONTROL METHOD**
STEUERGERÄT UND STEUERUNGSVERFAHREN
CONTRÔLEUR ET PROCÉDÉ DE CONTRÔLE

(30) Priority: 19.05.2023 JP 2023083418
(43) Date of publication of application: 27.11.2024
(73) Proprietor: Robert Bosch GmbH, 70442 Stuttgart (DE)
(72) Inventor: Takii, Hiromasa, Yokohama-shi, Kanagawa, 2248501 (JP)

(56) References cited:
- WO-A1-2022/269553
- US-A1- 2022 185 281

## Description

### BACKGROUND OF THE INVENTION

### 1. Field of the Invention

The present invention relates to a controller and a control method capable of improving safety of a straddle-type vehicle.

### 2. Description of the Background Art

Conventionally, various techniques for assisting with driving by a rider of a straddle-type vehicle such as a motorcycle have been proposed. For example, the following driver-assistance system is disclosed in JP2009-116882A. The driver assistance system warns the motorcycle rider that the motorcycle inappropriately approaches an obstacle on the basis of information detected by a sensor device that detects the obstacle present in a travel direction or substantially in the travel direction. US 2022/0185281 A1 describes suppressing the occupant of the own vehicle from feeling uneasy due to the relative speed of the own vehicle and the other vehicle traveling in the adjacent lane being too large, when the speed of the own vehicle is automatically controlled. WO 2022/269553 A1 describes executing inter-vehicle distance control in accordance with the intention of the rider and therefore, the safety of the saddle-ride type vehicle can be appropriately improved.

By the way, positional relationship adjustment action is available as a technique for assisting with driving of a vehicle. In the positional relationship adjustment action, a speed of an own vehicle is automatically controlled such that a positional relationship between the own vehicle and a preceding vehicle approaches a target positional relationship, and the preceding vehicle is a vehicle that travels in an own vehicle lane as a lane in which the own vehicle travels. It is considered to apply the positional relationship adjustment action to the straddle-type vehicle. Here, body behavior of the straddle-type vehicle is more unstable and agile than that of a four-wheeled automobile and the like. For this reason, a driver of another vehicle in an adjacent lane that is adjacent to the own vehicle lane is likely to misjudge a position of the own vehicle during acceleration, which may lead to an unexpected lane change by the other vehicle in the adjacent lane to the own vehicle lane. Therefore, improvement in safety is particularly desired in a situation where the speed of the straddle-type vehicle is automatically controlled by the positional relationship adjustment action.

The invention has been made with the above-described problem as the background and therefore obtains a controller and a control method capable of improving safety of a straddle-type vehicle.

### SUMMARY OF THE INVENTION

The inventions of a controller and a control method are defined by the independent claims 1 and 11. Preferable embodiments are defined by the dependent claims.

In the controller and the control method according to the invention, the execution section of the controller executes the positional relationship adjustment action to automatically control the speed of the own vehicle such that the positional relationship between the own vehicle and the preceding vehicle traveling in the own vehicle lane as the lane in which the own vehicle travels approaches the target positional relationship. The execution section executes the approach suppressing action to suppress the approach of the own vehicle to the preceding vehicle in the case where the determination condition is satisfied in the situation where the positional relationship adjustment action is executed while the own vehicle is being accelerated. The determination condition includes the first condition that the plural other vehicles exist in the adjacent lane that is adjacent to the own vehicle lane. As a result, in the situation where the plural other vehicles exist in the adjacent lane, that is, in a situation where any of the other vehicles is likely to change the lane to the own vehicle lane, it is possible with the approach suppressing action to suppress in advance accelerated travel by the positional relationship adjustment action from unexpectedly becoming unstable for a rider due to such a lane change. Therefore, safety of the straddle-type vehicle can be improved.

### BRIEF DESCRIPTION OF THE DRAWINGS

Fig. 1 is a schematic view illustrating an outline configuration of a straddle-type vehicle according to an embodiment of the invention.
Fig. 2 is a block diagram illustrating an example of a functional configuration of a controller according to the embodiment of the invention.
Fig. 3 is a view illustrating a first example of a traffic condition around the straddle-type vehicle according to the embodiment of the invention.
Fig. 4 is a view illustrating a second example of the traffic condition around the straddle-type vehicle according to the embodiment of the invention.
Fig. 5 is a flowchart illustrating an example of a processing procedure that is executed by the controller according to the embodiment of the invention.

### DETAILED DESCRIPTION OF THE INVENTION

A description will hereinafter be made on a controller and a control method according to the invention with reference to the drawings.

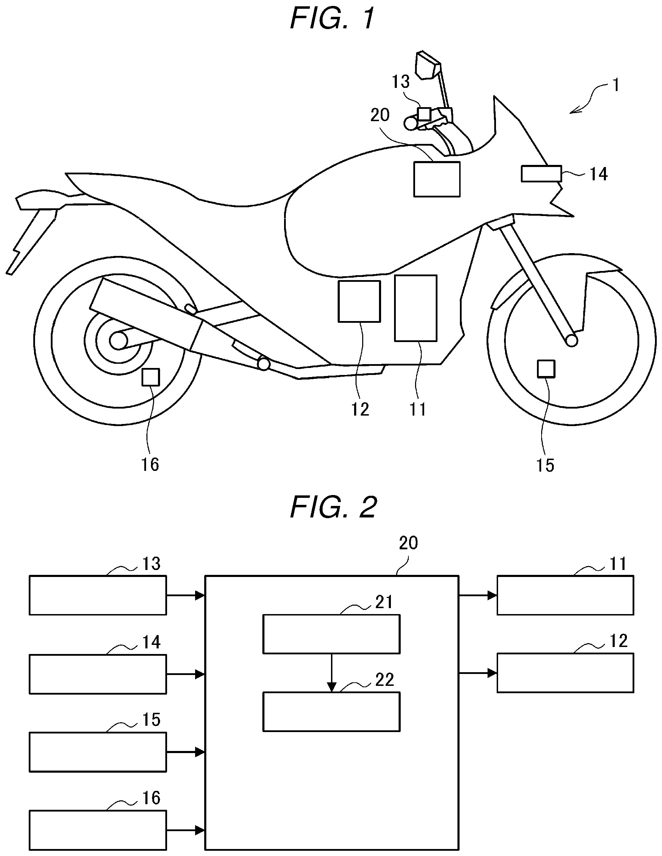

Hereinafter, a description will be made on a controller that is used for a two-wheeled motorcycle (see a straddle-type vehicle 1 in Fig. 1). However, a vehicle as a control target of the controller according to the invention may be a straddle-type vehicle other than the two-wheeled motorcycle. The straddle-type vehicle means a vehicle that a rider straddles. Examples of the straddle-type vehicle are motorcycles (a two-wheeled motor vehicle and a threewheeled motor vehicle), a bicycle, and an all-terrain vehicle. The motorcycles include a vehicle having an engine as a power source, a vehicle having an electric motor as a power source, and the like. Examples of the motorcycles are a motorbike, a scooter, and an electric scooter. The bicycle means a vehicle capable of traveling forward on a road by a depression force applied to pedals by a rider. Examples of the bicycle are a normal bicycle, an electrically-assisted bicycle, and an electric bicycle.

In addition, the following description will be made on a case where the engine (more specifically, an engine 11 in Fig. 1, which will be described below) is mounted as a drive source capable of outputting power for driving a drive wheel. However, as the drive source, a drive source other than the engine (for example, the electric motor) may be mounted, or a plurality of drive sources may be mounted.

Furthermore, the following description will be made on a case where a control unit (more specifically, a hydraulic pressure control unit 12 in Fig. 1, which will be described below) that controls a hydraulic pressure of a brake fluid is employed as a control unit for a braking force generated to a wheel. However, as the control unit for the braking force generated to the wheel, a control unit (a so-called brake-by-wire) that controls a position of a braking section itself for the wheel with an electric signal may be employed.

A configuration, action, and the like, which will be described below, merely constitute one example. The controller and the control method according to the invention are not limited to a case with such a configuration, such action, and the like.

The same or similar description will appropriately be simplified or will not be made below. In the drawings, the same or similar members or portions will not be denoted by a reference sign or will be denoted by the same reference sign. A detailed structure will appropriately be illustrated in a simplified manner or will not be illustrated.

### <Configuration of Straddle-Type Vehicle>

A description will be made on a configuration of the straddle-type vehicle 1 according to an embodiment of the invention with reference to Fig. 1 and Fig. 2.

Fig. 1 is a schematic view illustrating an outline configuration of the straddle-type vehicle 1. The straddle-type vehicle 1 is a two-wheeled motorcycle that corresponds to an example of the straddle-type vehicle according to the invention. As illustrated in Fig. 1, the straddle-type vehicle 1 includes the engine 11, the hydraulic pressure control unit 12, an input device 13, a surrounding environment sensor 14, a front-wheel rotational frequency sensor 15, a rear-wheel rotational frequency sensor 16, and a controller (ECU) 20. In the present specification, the straddle-type vehicle 1 will also be referred to as the own vehicle 1.

The engine 11 corresponds to an example of a drive source for the straddle-type vehicle 1, and can output power for driving a drive wheel (more specifically, a rear wheel). For example, the engine 11 is provided with: one or more cylinders, each of which is formed with a combustion chamber therein; a fuel injector that injects fuel into the combustion chamber; and an ignition plug. When the fuel is injected from the fuel injector, air-fuel mixture containing air and the fuel is produced in the combustion chamber, and the air-fuel mixture is then ignited by the ignition plug and burned. Consequently, a piston provided in the cylinder reciprocates to cause a crankshaft to rotate. In addition, a throttle valve is provided to an intake pipe of the engine 11, and an intake air amount to the combustion chamber varies according to a throttle opening amount that is an opening amount of the throttle valve.

The hydraulic pressure control unit 12 is a unit that has a function to control a braking force generated to a wheel. For example, the hydraulic pressure control unit 12 has components (for example, a control valve and a pump) that are provided on an oil channel connecting a master cylinder and a wheel cylinder to control a brake hydraulic pressure in the wheel cylinder. The braking force generated to the wheel is controlled when action of the components of the hydraulic pressure control unit 12 is controlled. The hydraulic pressure control unit 12 may separately control the braking force generated to a front wheel and the braking force generated to the rear wheel, or may only control the braking force generated to one of the front wheel and the rear wheel.

The input device 13 accepts various types of operations by the rider. For example, the input device 13 is provided to a handlebar, and includes a push button and the like that are used for the operations by the rider. Information on the rider's operation using the input device 13 is output to the controller 20.

The surrounding environment sensor 14 detects surrounding environment information on environment around the straddle-type vehicle 1. More specifically, the surrounding environment sensor 14 is provided to a front portion of the straddle-type vehicle 1, and detects the surrounding environment information in front of the straddle-type vehicle 1. The surrounding environment information detected by the surrounding environment sensor 14 is output to the controller 20.

The surrounding environment information detected by the surrounding environment sensor 14 may be information on a distance to or an orientation of a target object (for example, a relative position, a relative distance, a relative speed, relative acceleration, or the like) that is located around the straddle-type vehicle 1, or may be a characteristic of the target object (for example, a type of the target object, a shape of the target object itself, a mark on the target object, or the like) that is located around the straddle-type vehicle 1. Examples of the surrounding environment sensor 14 are a radar, a Lidar sensor, an ultrasonic sensor, and a camera.

The surrounding environment information can also be detected by a surrounding environment sensor mounted to another vehicle or by an infrastructure facility. In other words, the controller 20 can also acquire the surrounding environment information via wireless communication with the other vehicle or the infrastructure facility.

The front-wheel rotational frequency sensor 15 is a wheel rotational frequency sensor that detects a rotational frequency of the front wheel (for example, a rotational frequency of the front wheel per unit time [rpm], a travel distance of the front wheel per unit time [km/h], or the like), and outputs a detection result. The front-wheel rotational frequency sensor 15 may detect another physical quantity that can substantially be converted to the rotational frequency of the front wheel. The front-wheel rotational frequency sensor 15 is provided to the front wheel.

The rear-wheel rotational frequency sensor 16 is a wheel rotational frequency sensor that detects a rotational frequency of the rear wheel (for example, the rotational frequency of the rear wheel per unit time [rpm], a travel distance of the rear wheel per unit time [km/h], or the like), and outputs a detection result. The rear-wheel rotational frequency sensor 16 may detect another physical quantity that can substantially be converted to the rotational frequency of the rear wheel. The rear-wheel rotational frequency sensor 16 is provided to the rear wheel.

The controller 20 controls behavior of the straddle-type vehicle 1. For example, a part or whole of the controller 20 is a microcomputer, a microprocessor unit, or the like. Alternatively, the part or the whole of the controller 20 may be one whose firmware and the like can be updated, or may be a program module or the like that is executed by a command from a CPU or the like, for example. The controller 20 may be provided as one unit or may be divided into multiple units, for example.

Fig. 2 is a block diagram illustrating an example of a functional configuration of the controller 20. As illustrated in Fig. 2, the controller 20 includes an acquisition section 21 and an execution section 22, for example. The controller 20 communicates with each of the devices (for example, the engine 11, the hydraulic pressure control unit 12, the input device 13, the surrounding environment sensor 14, the front-wheel rotational frequency sensor 15, and the rear-wheel rotational frequency sensor 16) of the straddle-type vehicle 1. The controller 20 can control action of each of the devices (for example, the engine 11 and the hydraulic pressure control unit 12) of the straddle-type vehicle 1.

The acquisition section 21 acquires information from each of the devices of the straddle-type vehicle 1, and outputs the acquired information to the execution section 22. For example, the acquisition section 21 acquires information from the input device 13, the surrounding environment sensor 14, the front-wheel rotational frequency sensor 15, and the rear-wheel rotational frequency sensor 16. In the present specification, acquisition of the information can include extraction, generation (for example, calculation), and the like of the information.

The execution section 22 executes various types of control by controlling action of each of the devices of the straddle-type vehicle 1. For example, the execution section 22 controls the action of the engine 11 and the hydraulic pressure control unit 12.

In particular, the execution section 22 can execute positional relationship adjustment action. The positional relationship adjustment action is action to automatically control a speed of the own vehicle 1 such that a positional relationship between the own vehicle 1 and a preceding vehicle approaches a target positional relationship. The preceding vehicle is another vehicle that travels in an own vehicle lane as a lane in which the own vehicle 1 travels. In the positional relationship adjustment action, the execution section 22 may automatically control the speed of the own vehicle 1 such that a positional relationship between the own vehicle 1 and a target other than the vehicle (for example, a traffic light or the like) approaches a target positional relationship.

Hereinafter, a description will be made on an example in which adaptive cruise control is executed as the positional relationship adjustment action. Here, the positional relationship adjustment action only needs to be action for automatically controlling the speed of the own vehicle 1 such that the positional relationship between the own vehicle 1 and the preceding vehicle approaches the target positional relationship, and may be action other than the adaptive cruise control. For example, the positional relationship adjustment action may be action that is not canceled even with an accelerator operation by the rider and changes the target positional relationship according to an operation amount of the accelerator operation.

The execution section 22 initiates the adaptive cruise control with the rider's operation using the input device 13 as a trigger, for example. In the adaptive cruise control, the execution section 22 automatically controls the speed of the own vehicle 1 without relying on an accelerating/decelerating operation (that is, the accelerator operation and a brake operation) by the rider. The execution section 22 can control the speed of the own vehicle 1, for example, on the basis of information on the speed of the own vehicle 1 that is acquired on the basis of the rotational frequency of the front wheel and the rotational frequency of the rear wheel. In the control for the speed of the own vehicle 1, for example, the execution section 22 can automatically generate acceleration to the own vehicle 1 by controlling the action of the engine 11, and can automatically generate deceleration to the own vehicle 1 by controlling the action of the hydraulic pressure control unit 12. The adaptive cruise control is canceled when the rider performs a particular operation such as the brake operation.

In the adaptive cruise control, for example, a target inter-vehicle distance that is a target value of an inter-vehicle distance between the own vehicle 1 and the preceding vehicle is set, and the execution section 22 controls the speed of the own vehicle 1 such that the inter-vehicle distance between the own vehicle 1 and the preceding vehicle is maintained at the target inter-vehicle distance. In other words, such a positional relationship that the inter-vehicle distance between the own vehicle 1 and the preceding vehicle is the target inter-vehicle distance corresponds to the target positional relationship. Here, the inter-vehicle distance may mean a distance in a direction along a lane (more specifically, the lane in which the own vehicle 1 travels) or may mean a straight-line distance. For example, the acquisition section 21 acquires the inter-vehicle distance between the own vehicle 1 and the preceding vehicle on the basis of the surrounding environment information of the own vehicle 1. Then, based on the thus-acquired inter-vehicle distance, the execution section 22 can control the speed of the own vehicle 1 as described above.

However, in the adaptive cruise control, for example, a target passing time difference is set. The target passing time difference is a target value of a passing time difference (more specifically, a time required for the own vehicle 1 to pass a current location of the preceding vehicle from a current time point). Thus, the execution section 22 may control the speed of the own vehicle 1 in a manner to maintain the passing time difference to the target passing time difference. In this case, a positional relationship with which the passing time difference matches the target passing time difference corresponds to the target positional relationship. For example, the acquisition section 21 acquires the passing time difference on the basis of the surrounding environment information of the own vehicle 1. Then, based on the thus-acquired passing time difference, the execution section 22 can control the speed of the own vehicle 1 as described above.

### <Action of Controller>

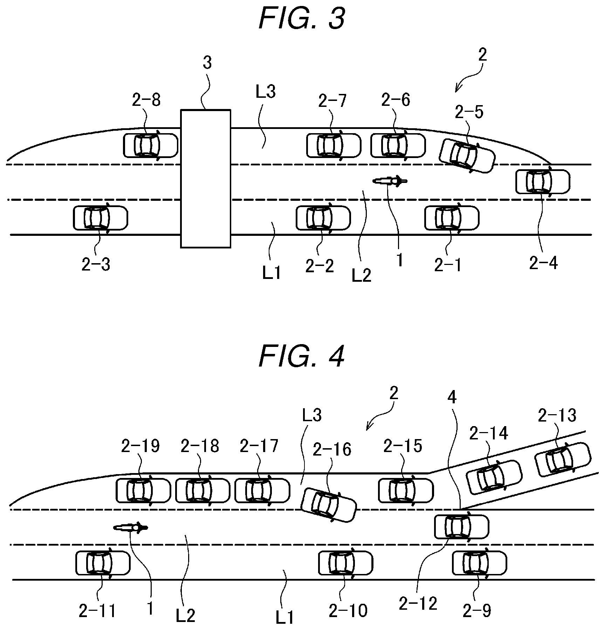

A description will be made on the action of the controller 20 according to the embodiment of the invention with reference to Fig. 3 to Fig. 5.

As described above, the execution section 22 of the controller 20 can execute the adaptive cruise control. Here, body behavior of the straddle-type vehicle 1 is more unstable and agile than that of the four-wheeled automobile and the like. For this reason, a driver of another vehicle in an adjacent lane that is adjacent to the own vehicle lane, in which the own vehicle 1 travels, is likely to misjudge a position of the own vehicle 1 during acceleration, which may lead to an unexpected lane change by the other vehicle in the adjacent lane to the own vehicle lane.

Fig. 3 is a view illustrating a first example of a traffic condition around the straddle-type vehicle 1. In the example of Fig. 3, the own vehicle 1 and plural other vehicles 2 are traveling on a road including three lanes of a lane L1, a lane L2, and a lane L3. More specifically, in the example of Fig. 3, eight other vehicles 2, that is, 2-1, 2-2, 2-3, 2-4, 2-5, 2-6, 2-7, 2-8 exist around the own vehicle 1. In the example of Fig. 3, the other vehicles 2 are four-wheeled automobiles. However, each of the other vehicles 2 may be a vehicle other than the four-wheeled automobile (for example, a motorcycle or the like).

The lane L1 is the rightmost lane of the three lanes and is a passing lane. The lane L2 is a center lane of the three lanes. The lane L3 is the leftmost lane of the three lanes. Fig. 3 illustrates a situation of an area around an Electronic Toll Collection System (ETC) gate 3. There are three lanes of the lane L1, the lane L2, and the lane L3 near the ETC gate 3. However, at a position ahead (on a right side in Fig. 3) of the ETC gate 3, the lane L3 is interrupted, and the number of the lanes is reduced.

In the example of Fig. 3, the other vehicles 2-1, 2-2, 2-3 are traveling in this order from the front in the lane L1. In the lane L2, the other vehicle 2-4 and the own vehicle 1 are traveling in this order from the front. In the lane L3, the other vehicles 2-5, 2-6, 2-7, 2-8 are traveling in this order from the front. The lane L2 corresponds to the own vehicle lane as the lane in which the own vehicle 1 travels. Hereinafter, the lane L2 will also be referred to as the own vehicle lane L2. The lane L1 and the lane L3 each correspond to the adjacent lane that is adjacent to the own vehicle lane L2.

In the example of Fig. 3, the other vehicle 2-4, which is the preceding vehicle traveling in front of the own vehicle 1 in the own vehicle lane L2, is a positional relationship adjustment target in the adaptive cruise control. Accordingly, in the adaptive cruise control, the execution section 22 automatically controls the speed of the own vehicle 1 such that a positional relationship between the own vehicle 1 and the other vehicle 2-4 approaches the target positional relationship.

By the way, at the position ahead of the ETC gate 3, the other vehicles 2 traveling in the lane L3 sequentially marge into the lane L2, causing congestion in the lane L3. In the example of Fig. 3, traffic is congested in the lane L3 as the adjacent lane, and thus the other vehicles 2-5, 2-6, 2-7 are traveling at low speeds in close proximity to each other. Then, the other vehicle 2-5 starts changing the lane toward a position in front of the own vehicle 1 in the lane L2. Meanwhile, in the own vehicle lane L2, the own vehicle 1 is traveling at a low speed. Just as described, in the example of Fig. 3, the other vehicle 2-5 changes the lane in front of the own vehicle 1 while the speed of the own vehicle 1 is low. In this case, an inter-vehicle distance between the own vehicle 1 and the other vehicle 2-4 as the preceding vehicle is reduced, and the lane change to the own vehicle lane L2 by the other vehicle 2-5 is an unexpected lane change for the rider of the own vehicle 1. Thus, in the case where the rider of the own vehicle 1 does not react to the lane change in a timely manner, there is a risk of contact or sudden approach between the other vehicle 2-5 and the own vehicle 1.

Fig. 4 is a view illustrating a second example of the traffic condition around the straddle-type vehicle 1. In the example of Fig. 4, similar to the example of Fig. 3, the own vehicle 1 and the plural other vehicles 2 are traveling on a road including three lanes of the lane L1, the lane L2, and the lane L3. More specifically, in the example of Fig. 4, 11 other vehicles 2-9, 2-10, 2-11, 2-12, 2-13, 2-14, 2-15, 2-16, 2-17, 2-18, 2-19 exist around the own vehicle 1. In the example of Fig. 4, similar to the example of Fig. 3, the other vehicles 2 are four-wheeled automobiles. However, each of the other vehicles 2 may be a vehicle other than the four-wheeled automobile (for example, a motorcycle or the like) .

Similar to the example of Fig. 3, the lane L1 is the rightmost lane of the three lanes and is a passing lane. The lane L2 is a center lane of the three lanes. The lane L3 is the leftmost lane of the three lanes. Fig. 4 illustrates a situation around a diverging point 4 where the lane L3 is diverged toward an area, such as a rest area, where vehicles can be parked. At a position behind (a left side in Fig. 4) the diverging point 4, the three lanes of the lane L1, the lane L2, and the lane L3 are stretched and aligned in the same direction. Then, the lane L3 is diverged from the lane L2 at the diverging point 4, and is stretched in a different direction from the lane L1 and the lane L2.

In the example of Fig. 4, the other vehicles 2-9, 2-10, 2-11 are traveling in this order from the front in the lane L1. In the lane L2, the other vehicle 2-12 and the own vehicle 1 are traveling in this order from the front. In the lane L3, the other vehicles 2-13, 2-14, 2-15, 2-16, 2-17, 2-18, 2-19 are traveling in this order from the front. Similar to the example of Fig. 3, the lane L2 corresponds to the own vehicle lane as the lane in which the own vehicle 1 travels, and the lane L1 and the lane L3 each correspond to the adjacent lane to the own vehicle lane L2.

In the example of Fig. 4, the other vehicle 2-12, which is the preceding vehicle traveling in front of the own vehicle 1 in the own vehicle lane L2, is the positional relationship adjustment target in the adaptive cruise control. Accordingly, in the adaptive cruise control, the execution section 22 automatically controls the speed of the own vehicle 1 such that a positional relationship between the own vehicle 1 and the other vehicle 2-12 approaches the target positional relationship.

By the way, the traffic is likely to be congested in the vicinity of the diverging point 4 in the lane L3 due to crowdedness of the rest area, which is a destination of the lane L3, or the like. In the example of Fig. 4, the traffic is congested in the lane L3 as the adjacent lane, and thus the other vehicles 2-13, 2-14, 2-15, 2-16, 2-17, 2-18, 2-19 are traveling at low speeds in close proximity to each other. Then, the other vehicle 2-16 starts changing the lane toward a position in front of the own vehicle 1 in the lane L2. Meanwhile, in the own vehicle lane L2, the own vehicle 1 is traveling while keeping a long inter-vehicle distance from the other vehicle 2-12. Just as described, in the example of Fig. 4, the other vehicle 2-16 changes the lane in front of the own vehicle 1 while the long inter-vehicle distance is maintained between the own vehicle 1 and the other vehicle 2-4 as the preceding vehicle. In this case, a speed difference of the own vehicle 1 with respect to the other vehicle 2-16 is increased, and the lane change to the own vehicle lane L2 by the other vehicle 2-16 is the unexpected lane change for the rider of the own vehicle 1. Thus, in the case where the rider of the own vehicle 1 does not react to the lane change in the timely manner, there is a risk of contact or sudden approach between the other vehicle 2-16 and the own vehicle 1. Here, the speed difference of the own vehicle 1 with respect to the other vehicle 2 means a value acquired by subtracting a speed of the other vehicle 2 from the speed of the own vehicle 1.

As described above, in the case where the other vehicle 2 in the adjacent lane unexpectedly changes the lane to the own vehicle lane L2, there is a risk of contact or sudden approach between the own vehicle 1 and the other vehicle 2 that is changing the lane from the adjacent lane to the own vehicle lane L2. Thus, in this embodiment, in order to improve safety in the situation where the speed of the own vehicle 1 is automatically controlled by the adaptive cruise control, the execution section 22 can execute approach suppressing action. As will be described below, the approach suppressing action is action to suppress approach of the own vehicle 1 to the preceding vehicle. Hereinafter, a description will be made on processing related to the approach suppressing action and executed by the controller 20.

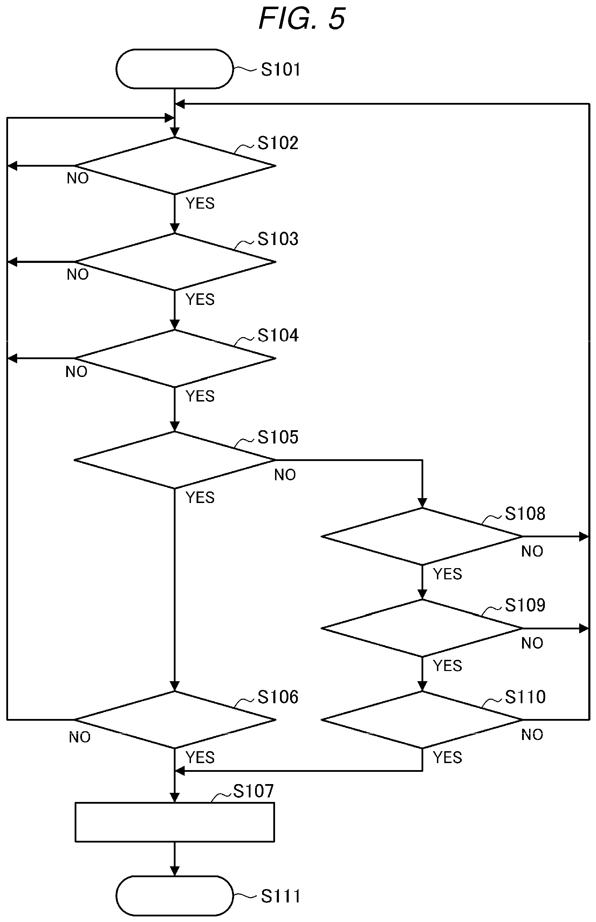

Fig. 5 is a flowchart illustrating an example of a processing procedure that is executed by the controller 20. A control flow illustrated in Fig. 5 is initiated when the adaptive cruise control is being executed. Step S101 in Fig. 5 corresponds to the initiation of the control flow illustrated in Fig. 5. Step S111 in Fig. 5 corresponds to termination of the control flow illustrated in Fig. 5.

As will be described below, the execution section 22 executes the approach suppressing action in the case where determination conditions are satisfied in a situation where the adaptive cruise control is executed while the own vehicle 1 is accelerated. The determination conditions can include various conditions. For example, in the following example, conditions such as first, second, third, fourth, fifth, sixth, and seventh conditions are listed as conditions that can be included in the determination conditions.

When the control flow illustrated in Fig. 5 is initiated, in step S102, the execution section 22 determines whether the own vehicle 1 is being accelerated.

In step S102, the execution section 22 determines whether the own vehicle 1 is being accelerated on the basis of speed state information of the own vehicle 1, for example. The speed state information of the own vehicle 1 is information on a state of the speed of the own vehicle 1, may be information on the speed itself, may be rough information in which a magnitude of the speed is expressed in several levels, or may be information that can substantially be converted to any of those pieces of the information, for example. The acquisition section 21 can acquire the speed state information of the own vehicle 1, for example, on the basis of the detection results by the front-wheel rotational frequency sensor 15 and the rear-wheel rotational frequency sensor 16. Here, the acquisition section 21 may estimate the speed state information of the own vehicle 1 by assuming that a speed of the preceding vehicle followed by the own vehicle 1 substantially matches the speed of the own vehicle 1.

If it is determined that the own vehicle 1 is not being accelerated (step S102/NO), the processing in step S102 is repeated. On the other hand, if it is determined that the own vehicle 1 is being accelerated (step S102/YES), the processing proceeds to step S103.

If it is determined YES in step S102, in step S103, the execution section 22 determines whether the first condition is satisfied. The first condition is a condition that the plural other vehicles 2 exist in the adjacent lane that is adjacent to the own vehicle lane L2. In other words, in step S103, the execution section 22 determines whether the plural other vehicles 2 exist in the adjacent lane.

In step S103, the execution section 22 can determine whether the plural other vehicles 2 exist in the adjacent lane, for example, on the basis of the detection result by the surrounding environment sensor 14. For example, in the example of Fig. 3 or the example of Fig. 4, the acquisition section 21 can acquire, as the surrounding environment information, information indicating that the plural other vehicles 2 exist in the lane L3 as the adjacent lane on the basis of the detection result by the surrounding environment sensor 14. Accordingly, the execution section 22 can determine that the plural other vehicles 2 exist in the lane L3 as the adjacent lane, and thus can determine that the first condition is satisfied.

If it is determined that the first condition is not satisfied (that is, the plural other vehicles 2 do not exist in the adjacent lane) (step S103/NO), the processing returns to step S102. On the other hand, if it is determined that the first condition is satisfied (that is, the plural other vehicles 2 exist in the adjacent lane) (step S103/YES), the processing proceeds to step S104.

If it is determined YES in step S103, in step S104, the execution section 22 determines whether the seventh condition is satisfied. The seventh condition is a condition that speed state information of the other vehicle 2 is information indicating that the speed of the other vehicle 2 in the adjacent lane is lower than a third reference speed. In other words, in step S104, the execution section 22 determines whether the speed state information of the other vehicle 2 is information indicating that the speed of the other vehicle 2 in the adjacent lane is lower than the third reference speed.

The speed state information of the other vehicle 2 is information on a state of the speed of the other vehicle 2, may be information on the speed itself, may be rough information in which a magnitude of the speed is expressed in several levels, or may be information that can substantially be converted to any of those pieces of the information, for example. The acquisition section 21 can acquire the speed of the other vehicle 2 as the speed state information of the other vehicle 2 on the basis of the speed of the own vehicle 1 and the speed difference of the own vehicle 1 with respect to the other vehicle 2, which can be acquired on the basis of the detection result by the surrounding environment sensor 14, for example. Here, the acquisition section 21 may acquire an average value of the speeds of the plural other vehicles 2 in the adjacent lane as the speed state information of the other vehicle 2, or may acquire the speed of the particular other vehicle 2 of the plural other vehicles 2 in the adjacent lane as the speed state information of the other vehicle 2.

The acquisition section 21 may acquire the speed state information of the other vehicle 2 on the basis of information on a travel position of the other vehicle 2. For example, in the case where the travel position of the other vehicle 2 is in the vicinity of the ETC gate 3, the acquisition section 21 may assume that the other vehicle 2 is traveling at the low speed, and may thereby acquire the speed state information of the other vehicle 2. In addition, for example, in the case where the travel position of the other vehicle 2 is in the vicinity of the diverging point 4, the acquisition section 21 may assume that the other vehicle 2 is traveling at the high speed, and may thereby acquire the speed state information of the other vehicle 2. Furthermore, the acquisition section 21 may acquire the speed state information of the other vehicle 2 on the basis of information on an upper speed limit indicated by a traffic sign.

For example, the third reference speed in step S104 is set to a low speed to such an extent that it can be determined that the traffic is congested in the adjacent lane, in which the plural other vehicles 2 exist, and thus the plural other vehicles 2 are traveling at the low speed in close proximity to each other. A case where the speed of the other vehicle 2 in the adjacent lane is lower than the third reference speed corresponds to a case where the traffic is congested in the adjacent lane.

If it is determined that the seventh condition is not satisfied (that is, the speed state information of the other vehicle 2 is not the information indicating that the speed of the other vehicle 2 in the adjacent lane is lower than the third reference speed) (step S104/NO), the processing returns to step S102. On the other hand, if it is determined that the seventh condition is satisfied (that is, the speed state information of the other vehicle 2 is the information indicating that the speed of the other vehicle 2 in the adjacent lane is lower than the third reference speed) (step S104/YES), the processing proceeds to step S105.

If it is determined YES in step S104, in step S105, the execution section 22 determines whether the second condition is satisfied. The second condition is a condition that the speed state information of the own vehicle 1 is information indicating that the speed of the own vehicle 1 is lower than a first reference speed. In other words, in step S105, the execution section 22 determines whether the speed state information of the own vehicle 1 is the information indicating that the speed of the own vehicle 1 is lower than the first reference speed.

For example, the first reference speed in step S105 is set to a low speed to such an extent that it can be determined that the inter-vehicle distance between the own vehicle 1 and the preceding vehicle is shortened and thus the lane change by the other vehicle 2 in the adjacent lane to the own vehicle lane L2 is the unexpected lane change for the rider of the own vehicle 1 (that is, a situation as in the example of Fig. 3 occurs). A case where the speed of the own vehicle 1 is lower than the first reference speed corresponds to a case where there is a high possibility of occurrence of the situation as in the example of Fig. 3.

As described above, for example, the acquisition section 21 acquires, as the speed state information of the own vehicle 1, the information on the speed itself of the own vehicle 1, the rough information in which the magnitude of the speed is expressed in several levels, the information that can substantially be converted to any of those pieces of the information, or the like. Here, the acquisition section 21 may acquire the speed state information of the own vehicle 1 on the basis of information on a travel position of the own vehicle 1. For example, in the case where the travel position of the own vehicle 1 is in the vicinity of the ETC gate 3, the acquisition section 21 may assume that the own vehicle 1 is traveling at the low speed, and may thereby acquire the speed state information of the own vehicle 1. In addition, for example, in the case where the travel position of the own vehicle 1 is in the vicinity of the diverging point 4, the acquisition section 21 may assume that the own vehicle 1 is traveling at the high speed, and may thereby acquire the speed state information of the own vehicle 1. Furthermore, the acquisition section 21 may acquire the speed state information of the own vehicle 1 on the basis of the information on the upper speed limit indicated by the traffic sign.

If it is determined that the second condition is not satisfied (that is, the speed state information of the own vehicle 1 is not the information indicating that the speed of the own vehicle 1 is lower than the first reference speed) (step S105/NO), the processing proceeds to step S108. On the other hand, if it is determined that the second condition is satisfied (that is, the speed state information of the own vehicle 1 is the information indicating that the speed of the own vehicle 1 is lower than the first reference speed) (step S105/YES), the processing proceeds to step S106.

If it is determined YES in step S105, in step S106, the execution section 22 determines whether the third condition is satisfied. The third condition is a condition that speed difference state information of the own vehicle 1 with respect to the other vehicle 2 in the adjacent lane is information indicating that the speed difference of the own vehicle 1 with respect to the other vehicle 2 is smaller than a first reference speed difference. In other words, in step S106, the execution section 22 determines whether the speed difference state information of the own vehicle 1 with respect to the other vehicle 2 in the adjacent lane is the information indicating that the speed difference of the own vehicle 1 with respect to the other vehicle 2 is smaller than the first reference speed difference.

The speed difference state information of the own vehicle 1 with respect to the other vehicle 2 is information on a state of the speed difference of the own vehicle 1 with respect to the other vehicle 2, may be information on the speed difference itself, may be rough information in which a magnitude of the speed difference is expressed in several levels, or may be information that can substantially be converted to any of those pieces of the information, for example. For example, the acquisition section 21 can acquire the speed difference of the own vehicle 1 with respect to the other vehicle 2 as the speed difference state information on the basis of the detection result by the surrounding environment sensor 14.

Here, the acquisition section 21 may acquire, as the speed difference state information, the number of the other vehicles 2 overtaken by the own vehicle 1 per unit time among the plural other vehicles 2 in the adjacent lane. The acquisition section 21 can acquire information on the number of the other vehicles 2 overtaken by the own vehicle 1 per unit time among the plural other vehicles 2 in the adjacent lane, for example, on the basis of the detection result by the surrounding environment sensor 14.

For example, the first reference speed difference in step S106 is set to a small speed difference to such an extent that it can be determined that the inter-vehicle distance between the own vehicle 1 and the preceding vehicle is shortened and thus the lane change by the other vehicle 2 in the adjacent lane to the own vehicle lane L2 is the unexpected lane change for the rider of the own vehicle 1 (that is, the situation as in the example of Fig. 3 occurs). A case where the speed difference of the own vehicle 1 with respect to the other vehicle 2 in the adjacent lane is smaller than the first reference speed difference corresponds to the case where there is the higher possibility of occurrence of the situation as in the example of Fig. 3.

If it is determined that the third condition is not satisfied (that is, the speed difference state information of the own vehicle 1 with respect to the other vehicle 2 in the adjacent lane is not the information indicating that the speed difference of the own vehicle 1 with respect to the other vehicle 2 is smaller than the first reference speed difference) (step S106/NO), the processing returns to step S102. On the other hand, if it is determined that the third condition is satisfied (that is, the speed difference state information of the own vehicle 1 with respect to the other vehicle 2 in the adjacent lane is the information indicating that the speed difference of the own vehicle 1 with respect to the other vehicle 2 is smaller than the first reference speed difference) (step S106/NO), the processing proceeds to step S107.

If it is determined YES in step S106, in step S107, the execution section 22 executes the approach suppressing action, and then the control flow illustrated in Fig. 5 is terminated. Here, the execution section 22 terminates the approach suppressing action when a predetermined time passes after the approach suppressing action is started, for example. Thereafter, the control flow illustrated in Fig. 5 is initiated again.

A case where it is determined YES in step S105 and step S106 corresponds to a case where it is assumed that the inter-vehicle distance between the own vehicle 1 and the preceding vehicle is shortened and thus the lane change by the other vehicle 2 in the adjacent lane to the own vehicle lane L2 is the unexpected lane change for the rider of the own vehicle 1 (that is, the situation as in the example of Fig. 3 occurs). In this case, the determination conditions in the approach suppressing action include the first condition, the second condition, the third condition, and the seventh condition in addition to the condition that the own vehicle 1 is being accelerated.

In the flowchart illustrated in Fig. 5, as will be described below, the execution section 22 also executes the approach suppressing action in the case where it is assumed that a situation as in the example of Fig. 4 occurs (more specifically, if it is determined YES in step S108, step S109, and step S110, which will be described below).

As described above, the approach suppressing action is the action to suppress the approach of the own vehicle 1 to the preceding vehicle. For example, in the approach suppressing action, the execution section 22 suppresses the approach of the own vehicle 1 to the preceding vehicle, which is the positional relationship adjustment target in the adaptive cruise control, by controlling the action of the engine 11 and the hydraulic pressure control unit 12. For example, in the example of Fig. 3, the execution section 22 suppresses the approach of the own vehicle 1 to the preceding vehicle 2-4 in the approach suppressing action. In addition, for example, in the example of Fig. 5, the execution section 22 suppresses the approach of the own vehicle 1 to the preceding vehicle 2-12 in the approach suppressing action.

For example, the approach suppressing action may be action to set the target positional relationship between the own vehicle 1 and the preceding vehicle to such a positional relationship that the own vehicle 1 is located farther away from the preceding vehicle than in a case where any of the determination conditions in the approach suppressing action is not satisfied. Hereinafter, such action will also be referred to as first action.

For example, in the first action, the execution section 22 lengthens the target inter-vehicle distance in the adaptive cruise control to be longer than that in the case where any of the determination conditions in the approach suppressing action is not satisfied. As a result, compared to the case where any of the determination conditions in the approach suppressing action is not satisfied, the target positional relationship between the own vehicle 1 and the preceding vehicle becomes such a positional relationship that the own vehicle 1 is further away from the preceding vehicle.

Alternatively, for example, in the first action, the execution section 22 increases the target passing time difference in the adaptive cruise control to be longer than that in the case where any of the determination conditions in the approach suppressing action is not satisfied. As a result, compared to the case where any of the determination conditions in the approach suppressing action is not satisfied, the target positional relationship between the own vehicle 1 and the preceding vehicle becomes such a positional relationship that the own vehicle 1 is further away from the preceding vehicle.

In addition, for example, the approach suppressing action may be action to reduce the acceleration generated to the own vehicle 1 to be lower than that in the case where any of the determination conditions in the approach suppressing action is not satisfied. Hereinafter, such action will also be referred to as second action.

For example, in the adaptive cruise control, the execution section 22 controls the acceleration generated to the own vehicle 1 to be equal to or lower than an acceleration upper limit value. Then, in the second action, the execution section 22 reduces the acceleration upper limit value to be lower than that in the case where any of the determination conditions in the approach suppressing action is not satisfied. As a result, the acceleration generated to the own vehicle 1 becomes lower than that in the case where any of the determination conditions in the approach suppressing action is not satisfied.

However, in the second action, the execution section 22 may reduce the acceleration generated to the own vehicle 1 by a method other than the method in which the acceleration upper limit value is reduced. For example, in the second action, the execution section 22 may reduce the acceleration generated to the own vehicle 1 by reducing a target value itself of the acceleration generated to the own vehicle 1.

Furthermore, for example, the approach suppressing action may be action to reduce a change rate of the acceleration generated to the own vehicle 1 to be lower than that in the case where any of the determination conditions in the approach suppressing action is not satisfied. Hereinafter, such action will also be referred to as third action.

For example, in the adaptive cruise control, the execution section 22 controls the change rate of the acceleration generated to the own vehicle 1 to be equal to or lower than an acceleration change rate upper limit value. Then, in the third action, the execution section 22 reduces the acceleration change rate upper limit value to be lower than that in the case where any of the determination conditions in the approach suppressing action is not satisfied. As a result, the change rate of the acceleration generated to the own vehicle 1 becomes lower than that in the case where any of the determination conditions in the approach suppressing action is not satisfied.

However, in the third action, the execution section 22 may reduce the change rate of the acceleration generated to the own vehicle 1 by a method other than the method of reducing the acceleration change rate upper limit value. For example, in the third action, the execution section 22 may reduce the change rate of the acceleration generated to the own vehicle 1 by reducing a target value itself of the change rate of the acceleration generated to the own vehicle 1.

The execution section 22 may execute all of the first action, the second action, and the third action described above as the approach suppressing action, or may only execute at least desired one of the first action, the second action, and the third action as the approach suppressing action.

If it is determined NO in step S105, in step S108, the execution section 22 determines whether the fourth condition is satisfied. The fourth condition is a condition that the speed difference state information of the own vehicle 1 with respect to the other vehicle 2 in the adjacent lane is information indicating that the speed difference of the own vehicle 1 with respect to the other vehicle 2 is larger than a second reference speed difference. In other words, in step S108, the execution section 22 determines whether the speed difference state information of the own vehicle 1 with respect to the other vehicle 2 in the adjacent lane is the information indicating that the speed difference of the own vehicle 1 with respect to the other vehicle 2 is larger than the second reference speed difference.

For example, the second reference speed difference in step S108 is set to a large speed difference to such an extent that it can be determined that the speed difference of the own vehicle 1 with respect to the other vehicle 2 in the adjacent lane is increased, and the inter-vehicle distance between the own vehicle 1 and the preceding vehicle is long, but the lane change by the other vehicle 2 in the adjacent lane to the own vehicle lane L2 is the unexpected lane change for the rider of the own vehicle 1 (that is, the situation as in the example of Fig. 4 occurs). A case where the speed difference of the own vehicle 1 with respect to the other vehicle 2 in the adjacent lane is larger than the second reference speed difference corresponds to the case where there is the high possibility of occurrence of the situation as in the example of Fig. 4.

If it is determined that the fourth condition is not satisfied (that is, the speed difference state information of the own vehicle 1 with respect to the other vehicle 2 in the adjacent lane is not the information indicating that the speed difference of the own vehicle 1 with respect to the other vehicle 2 is larger than the second reference speed difference) (step S108/NO), the processing returns to step S102. On the other hand, if it is determined that the fourth condition is satisfied (that is, the speed difference state information of the own vehicle 1 with respect to the other vehicle 2 in the adjacent lane is the information indicating that the speed difference of the own vehicle 1 with respect to the other vehicle 2 is larger than the second reference speed difference) (step S108/YES), the processing proceeds to step S109.

If it is determined YES in step S108, in step S109, the execution section 22 determines whether the fifth condition is satisfied. The fifth condition is a condition that speed difference state information of the own vehicle 1 with respect to the other vehicle 2 in the adjacent lane is information indicating that the speed difference of the own vehicle 1 with respect to the other vehicle 2 is smaller than a third reference speed difference that is larger than the second reference speed difference. In other words, in step S109, the execution section 22 determines whether the speed difference state information of the own vehicle 1 with respect to the other vehicle 2 in the adjacent lane is the information indicating that the speed difference of the own vehicle 1 with respect to the other vehicle 2 is smaller than the third reference speed difference.

For example, the third reference speed difference in step S109 is set to a large speed difference to such an extent that it can be determined that the other vehicle 2 in the adjacent lane does not change the lane to the own vehicle lane L2 due to the excessively large speed difference of the own vehicle 1 with respect to the other vehicle 2 in the adjacent lane although the inter-vehicle distance between the own vehicle 1 and the preceding vehicle is long. A case where the speed difference of the own vehicle 1 with respect to the other vehicle 2 in the adjacent lane is larger than the third reference speed corresponds to a case where it is assumed that the other vehicle 2 in the adjacent lane does not change the lane to the own vehicle lane L2 although the inter-vehicle distance between the own vehicle 1 and the preceding vehicle is long as in the example of Fig. 4.

If it is determined that the fifth condition is not satisfied (that is, the speed difference state information of the own vehicle 1 with respect to the other vehicle 2 in the adjacent lane is not the information indicating that the speed difference of the own vehicle 1 with respect to the other vehicle 2 is smaller than the third reference speed difference) (step S109/NO), the processing returns to step S102. On the other hand, if it is determined that the fifth condition is satisfied (that is, the speed difference state information of the own vehicle 1 with respect to the other vehicle 2 in the adjacent lane is the information indicating that the speed difference of the own vehicle 1 with respect to the other vehicle 2 is smaller than the third reference speed difference) (step S109/YES), the processing proceeds to step S110.

If it is determined YES in step S109, in step S110, the execution section 22 determines whether the sixth condition is satisfied. The sixth condition is a condition that the speed state information of the own vehicle 1 is information indicating that the speed of the own vehicle 1 is higher than a second reference speed. In other words, in step S110, the execution section 22 determines whether the speed state information of the own vehicle 1 is the information indicating that the speed of the own vehicle 1 is higher than the second reference speed.

For example, the second reference speed in step S110 is set to a high speed to such an extent that it can be determined that the speed difference of the own vehicle 1 with respect to the other vehicle 2 in the adjacent lane is increased, and the inter-vehicle distance between the own vehicle 1 and the preceding vehicle is long, but the lane change by the other vehicle 2 in the adjacent lane to the own vehicle lane L2 is the unexpected lane change for the rider of the own vehicle 1 (that is, the situation as in the example of Fig. 4 occurs). A case where the speed of the own vehicle 1 is higher than the second reference speed corresponds to the case where there is the high possibility of occurrence of the situation as in the example of Fig. 4.

If it is determined that the sixth condition is not satisfied (that is, the speed state information of the own vehicle 1 is not the information indicating that the speed of the own vehicle 1 is higher than the second reference speed) (step S110/NO), the processing returns to step S102. On the other hand, if it is determined that the sixth condition is satisfied (that is, the speed state information of the own vehicle 1 is the information indicating that the speed of the own vehicle 1 is higher than the second reference speed) (step S110/YES), the processing proceeds to step S107.

If it is determined YES in step S110, in step S107, the execution section 22 executes the approach suppressing action, and then the control flow illustrated in Fig. 5 is terminated.

A case where it is determined YES in step S108, step S109, and step S110 corresponds to a case where it is assumed that the speed difference of the own vehicle 1 with respect to the other vehicle 2 in the adjacent lane is increased, and the inter-vehicle distance between the own vehicle 1 and the preceding vehicle is long, but the lane change by the other vehicle 2 in the adjacent lane to the own vehicle lane L2 is the unexpected lane change for the rider of the own vehicle 1 (that is, the situation as in the example of Fig. 4 occurs). In this case, the determination conditions in the approach suppressing action include the first condition, the fourth condition, the fifth condition, the sixth condition, and the seventh condition in addition to the condition that the own vehicle 1 is being accelerated.

As it has been described so far, in this embodiment, the execution section 22 of the controller 20 executes the approach suppressing action to suppress the approach of the own vehicle 1 to the preceding vehicle in the case where the determination conditions are satisfied in the situation where the positional relationship adjustment action (the adaptive cruise control in the above example) is executed while the own vehicle 1 is being accelerated. The determination conditions include the first condition that the plural other vehicles 2 exist in the adjacent lane that is adjacent to the own vehicle lane L2. Accordingly, even in the case where the other vehicle 2 in the adjacent lane unexpectedly changes the lane to the own vehicle lane L2, it is possible with the approach suppressing action to suppress the approach of the own vehicle 1 to the preceding vehicle in advance. Thus, it is possible to suppress the contact or the sudden approach between the own vehicle 1 and the other vehicle 2 that is changing the lane from the adjacent lane to the own vehicle lane L2. Therefore, it is possible to improve the safety of the straddle-type vehicle 1.

The above description has been made on the processing example executed by the controller 20 with reference to the flowchart in Fig. 5. However, the processing executed by the controller 20 may be processing that is acquired by modifying the processing example described above.

For example, in the above description, the first, second, third, fourth, fifth, sixth, and seventh conditions are used as the conditions that can be included in the determination conditions in the approach suppressing action. However, the determination conditions in the approach suppressing action only need to include at least the first condition, and some or all of the second, third, fourth, fifth, sixth, and seventh conditions may not be used. In other words, some or all of step S105 as the determination processing for the second condition, step S106 as the determination processing for the third condition, step S108 as the determination processing for the fourth condition, step S109 as the determination processing for the fifth condition, step S110 as the determination processing for the sixth condition, and step S104 as the determination processing for the seventh condition may be eliminated from the flowchart in Fig. 5. For example, the processing in step S105 and step S106 regarding the determination on the possibility of the situation as in the example of Fig. 3 may partially be eliminated. Alternatively, for example, the processing in step S108, step S109, and step S110 regarding the determination on the possibility of the situation as in the example of Fig. 4 may partially be eliminated. Further alternatively, for example, one of the processing regarding the determination on the possibility of the situation as in the example of Fig. 3 and the processing regarding the determination on the possibility of the situation as in the example of Fig. 4 may be eliminated.

### <Effects of Controller>

A description will be made on effects of the controller 20 according to the embodiment of the invention.

The controller 20 includes the execution section 22 that executes the positional relationship adjustment action (for example, the adaptive cruise control) to automatically control the speed of the own vehicle 1 such that the positional relationship between the own vehicle 1 and the preceding vehicle (for example, the other vehicle 2-4 in Fig. 3 or the other vehicle 2-12 in Fig. 4) approaches the target positional relationship, the preceding vehicle traveling in the own vehicle lane L2 as the lane in which the own vehicle 1 travels. The execution section 22 executes the approach suppressing action to suppress the approach of the own vehicle 1 to the preceding vehicle in the case where the determination condition is satisfied in the situation where the positional relationship adjustment action is executed while the own vehicle 1 is being accelerated. The determination condition includes the first condition that the plural other vehicles 2 exist in the adjacent lane (for example, the lane L3 in the example of Fig. 3 or the example of Fig. 4) that is adjacent to the own vehicle lane L2. As a result, in the situation where the plural other vehicles 2 exist in the adjacent lane, that is, in the situation where any of the other vehicles 2 is likely to change the lane to the own vehicle lane L2, it is possible to suppress in advance accelerated travel by the positional relationship adjustment action from unexpectedly becoming unstable for the rider due to such a lane change. Therefore, the safety of the straddle-type vehicle 1 can be improved.

Preferably, in the controller 20, the determination condition further includes the second condition that the speed state information of the own vehicle 1 is the information indicating that the speed of the own vehicle 1 is lower than the first reference speed. As a result, in the case where the inter-vehicle distance between the own vehicle 1 and the preceding vehicle is shortened, and the lane change by the other vehicle 2 in the adjacent lane to the own vehicle lane L2 is the unexpected lane change for the rider of the own vehicle 1 (that is, the situation as in the example of Fig. 3 occurs), the approach suppressing action is appropriately executed. Therefore, the safety of the straddle-type vehicle 1 is appropriately improved by suppressing the contact or the sudden approach between the own vehicle 1 and the other vehicle 2 that changes the lane from the adjacent lane to the own vehicle lane L2.

Preferably, in the controller 20, the determination condition further includes the third condition that the speed difference state information of the own vehicle 1 with respect to the other vehicle 2 in the adjacent lane is the information indicating that the speed difference of the own vehicle 1 with respect to the other vehicle 2 is smaller than the first reference speed difference. As a result, in the case where the inter-vehicle distance between the own vehicle 1 and the preceding vehicle is shortened, and the lane change by the other vehicle 2 in the adjacent lane to the own vehicle lane L2 is the unexpected lane change for the rider of the own vehicle 1 (that is, the situation as in the example of Fig. 3 occurs), the approach suppressing action is further appropriately executed. Therefore, the safety of the straddle-type vehicle 1 is further appropriately improved by suppressing the contact or the sudden approach between the own vehicle 1 and the other vehicle 2 that changes the lane from the adjacent lane to the own vehicle lane L2.

Preferably, in the controller 20, the determination condition further includes the fourth condition that the speed difference state information of the own vehicle 1 with respect to the other vehicle 2 in the adjacent lane is the information indicating that the speed difference of the own vehicle 1 with respect to the other vehicle 2 is larger than the second reference speed difference. As a result, in the case where the inter-vehicle distance between the own vehicle 1 and the preceding vehicle is long, but the lane change by the other vehicle 2 in the adjacent lane to the own vehicle lane L2 is the unexpected lane change for the rider of the own vehicle 1 (that is, the situation as in the example of Fig. 4 occurs), the approach suppressing action is appropriately executed. Therefore, the safety of the straddle-type vehicle 1 is appropriately improved by suppressing the contact or the sudden approach between the own vehicle 1 and the other vehicle 2 that changes the lane from the adjacent lane to the own vehicle lane L2.

Preferably, in the controller 20, the determination condition further includes the fifth condition that the speed difference state information of the own vehicle 1 with respect to the other vehicle 2 in the adjacent lane is the information indicating that the speed difference of the own vehicle 1 with respect to the other vehicle 2 is smaller than the third reference speed difference that is larger than the second reference speed difference. As a result, in the case where it is assumed that the other vehicle 2 in the adjacent lane does not change the lane to the own vehicle lane L2 although the inter-vehicle distance between the own vehicle 1 and the preceding vehicle is long as in the example of Fig. 4, it is possible to suppress the approach suppressing action from being executed unnecessarily.

Preferably, in the controller 20, the determination condition further includes the sixth condition that the speed state information of the own vehicle 1 is the information indicating that the speed of the own vehicle 1 is higher than the second reference speed. As a result, in the case where the inter-vehicle distance between the own vehicle 1 and the preceding vehicle is long, but the lane change by the other vehicle 2 in the adjacent lane to the own vehicle lane L2 is the unexpected lane change for the rider of the own vehicle 1 (that is, the situation as in the example of Fig. 4 occurs), the approach suppressing action is further appropriately executed. Therefore, the safety of the straddle-type vehicle 1 is further appropriately improved by suppressing the contact or the sudden approach between the own vehicle 1 and the other vehicle 2 that changes the lane from the adjacent lane to the own vehicle lane L2.

Preferably, in the controller 20, the determination condition further includes the seventh condition that the speed state information of the other vehicle 2 in the adjacent lane is the information indicating that the speed of the other vehicle 2 is lower than the third reference speed. As a result, in the case where the traffic is congested in the adjacent lane, and there is the high possibility that the other vehicle 2 in the adjacent lane unexpectedly changes the lane to the own vehicle lane L2, the approach suppressing action is appropriately executed. Therefore, the safety of the straddle-type vehicle 1 is appropriately improved by suppressing the contact or the sudden approach between the own vehicle 1 and the other vehicle 2 that changes the lane from the adjacent lane to the own vehicle lane L2.

Preferably, in the controller 20, the approach suppressing action is the action to set the target positional relationship between the own vehicle 1 and the preceding vehicle to such a positional relationship that the own vehicle 1 is located farther away from the preceding vehicle than in the case where the determination condition is not satisfied. As a result, the approach of the own vehicle 1 to the preceding vehicle is appropriately suppressed by the approach suppressing action.

Preferably, in the controller 20, the acceleration suppressing action is the action to reduce the acceleration generated to the own vehicle 1 to be lower than that in the case where the determination condition is not satisfied. As a result, the approach of the own vehicle 1 to the preceding vehicle is appropriately suppressed by the approach suppressing action.

Preferably, in the controller 20, the acceleration suppressing action is the action to reduce the change rate of the acceleration generated to the own vehicle 1 to be lower than that in the case where the determination condition is not satisfied. As a result, the approach of the own vehicle 1 to the preceding vehicle is appropriately suppressed by the approach suppressing action.

The invention is not limited to the embodiment that has been described. For example, only a part of the embodiment may be implemented.

## Claims

1. A controller (20) that is configured to control behavior of a straddle-type vehicle (1), the controller comprising:
an execution section (22) that executes positional relationship adjustment action to automatically control a speed of an own vehicle (1) such that a positional relationship between the own vehicle (1) and a preceding vehicle (2-4, 2-12) approaches a target positional relationship, the preceding vehicle (2-4, 2-12) traveling in an own vehicle lane (L2) as a lane in which the own vehicle (1) travels, wherein
the execution section (22) executes approach suppressing action to suppress approach of the own vehicle (1) to the preceding vehicle (2-4, 2-12) in the case where a determination condition is satisfied in a situation where the positional relationship adjustment action is executed while the own vehicle (1) is being accelerated, and
the determination condition includes a first condition that plural other vehicles (2) exist in an adjacent lane (L3) that is adjacent to the own vehicle lane (L2).

2. The controller according to claim 1, wherein
the determination condition further includes a second condition that speed state information of the own vehicle (1) is information indicating that the speed of the own vehicle (1) is lower than a first reference speed.

3. The controller according to claim 2, wherein
the determination condition further includes a third condition that speed difference state information of the own vehicle (1) with respect to the other vehicles (2) is information indicating that a speed difference of the own vehicle (1) with respect to the other vehicle (2) is smaller than a first reference speed difference.

4. The controller according to claim 1, wherein
the determination condition further includes a fourth condition that speed difference state information of the own vehicle (1) with respect to the other vehicles (2) is information indicating that a speed difference of the own vehicle (1) with respect to the other vehicle (2) is larger than a second reference speed difference.

5. The controller according to claim 4, wherein
the determination condition further includes a fifth condition that the speed difference state information is information indicating that the speed difference is smaller than a third reference speed that is larger than the second reference speed difference.

6. The controller according to claim 4, wherein
the determination condition further includes a sixth condition that speed state information of the own vehicle (1) is information indicating that the speed of the own vehicle (1) is higher than a second reference speed.

7. The controller according to claim 1, wherein
the determination condition further includes a seventh condition that speed state information of the other vehicles (2) is information indicating that a speed of the other vehicle (2) is lower than a third reference speed.

8. The controller according to any one of claims 1 to 7, wherein
the approach suppressing action is action to set the target positional relationship to such a positional relationship that the own vehicle (1) is located farther away from the preceding vehicle (2-4, 2-12) than in the case where the determination condition is not satisfied.

9. The controller according to any one of claims 1 to 7, wherein
the approach suppressing action is action to reduce acceleration generated to the own vehicle (1) to be lower than that in the case where the determination condition is not satisfied.

10. The controller according to any one of claims 1 to 7, wherein
the approach suppressing action is action to reduce a change rate of acceleration generated to the own vehicle (1) to be lower than that in the case where the determination condition is not satisfied.

11. A control method for controlling behavior of a straddle-type vehicle (1), the control method comprising:
executing positional relationship adjustment action by an execution section (22) of a controller (20) to automatically control a speed of an own vehicle (1) such that a positional relationship between the own vehicle (1) and a preceding vehicle (2-4, 2-12) approaches a target positional relationship, the preceding vehicle (2-4, 2-12) traveling in an own vehicle lane (L2) as a lane in which the own vehicle (1) travels, wherein
the execution section (22) executes approach suppressing action to suppress approach of the own vehicle (1) to the preceding vehicle (2-4, 2-12) in the case where a determination condition is satisfied in a situation where the positional relationship adjustment action is executed while the own vehicle (1) is being accelerated, and
the determination condition includes a first condition that plural other vehicles (2) exist in an adjacent lane (L3) that is adjacent to the own vehicle lane (L2).

## Patentansprüche

1. Steuergerät (20), das ausgelegt ist zum Steuern des Verhaltens eines Spreizsitzfahrzeugs (1), wobei das Steuergerät Folgendes umfasst:
einen Ausführungsabschnitt (22), der eine Positionsbeziehungsanpassungsaktion ausführt, um automatisch eine Geschwindigkeit eines eigenen Fahrzeugs (1) so zu steuern, dass sich eine Positionsbeziehung zwischen dem eigenen Fahrzeug (1) und einem vorausfahrenden Fahrzeug (2-4, 2-12) einer Zielpositionsbeziehung nähert, wobei das vorausfahrende Fahrzeug (2-4, 2-12) in einer eigenen Fahrzeugspur (L2) fährt, wie eine Spur, in der sich das eigene Fahrzeug (1) bewegt, wobei
der Ausführungsabschnitt (22) eine Annäherungsunterdrückungsaktion ausführt, um eine Annäherung des eigenen Fahrzeugs (1) an das vorausfahrende Fahrzeug (2-4, 2-12) zu unterdrücken, falls eine Bestimmungsbedingung in einer Situation erfüllt ist, in der die Positionsbeziehungsanpassungsaktion ausgeführt wird, während das eigene Fahrzeug (1) beschleunigt wird, und
die Bestimmungsbedingung eine erste Bedingung umfasst, dass mehrere andere Fahrzeuge (2) in einer angrenzenden Spur (L3) vorhanden sind, die an die eigene Fahrzeugspur (L2) angrenzt.

2. Steuergerät nach Anspruch 1, wobei
die Bestimmungsbedingung ferner eine zweite Bedingung umfasst, dass Geschwindigkeitszustandsinformationen des eigenen Fahrzeugs (1) Informationen sind, die angeben, dass die Geschwindigkeit des eigenen Fahrzeugs (1) niedriger als eine erste Referenzgeschwindigkeit ist.

3. Steuergerät nach Anspruch 2, wobei
die Bestimmungsbedingung ferner eine dritte Bedingung umfasst, dass Geschwindigkeitsdifferenzzustandsinformationen des eigenen Fahrzeugs (1) in Bezug auf die anderen Fahrzeuge (2) Informationen sind, die angeben, dass eine Geschwindigkeitsdifferenz des eigenen Fahrzeugs (1) in Bezug auf das andere Fahrzeug (2) kleiner als eine erste Referenzgeschwindigkeitsdifferenz ist.

4. Steuergerät nach Anspruch 1, wobei
die Bestimmungsbedingung ferner eine vierte Bedingung umfasst, dass Geschwindigkeitsdifferenzzustandsinformationen des eigenen Fahrzeugs (1) in Bezug auf die anderen Fahrzeuge (2) Informationen sind, die angeben, dass eine Geschwindigkeitsdifferenz des eigenen Fahrzeugs (1) in Bezug auf das andere Fahrzeug (2) größer als eine zweite Referenzgeschwindigkeitsdifferenz ist.

5. Steuergerät nach Anspruch 4, wobei
die Bestimmungsbedingung ferner eine fünfte Bedingung umfasst, dass die Geschwindigkeitsdifferenzzustandsinformationen Informationen sind, die angeben, dass die Geschwindigkeitsdifferenz kleiner als eine dritte Referenzgeschwindigkeit ist, die größer als die zweite Referenzgeschwindigkeitsdifferenz ist.

6. Steuergerät nach Anspruch 4, wobei
die Bestimmungsbedingung ferner eine sechste Bedingung umfasst, dass Geschwindigkeitszustandsinformationen des eigenen Fahrzeugs (1) Informationen sind, die angeben, dass die Geschwindigkeit des eigenen Fahrzeugs (1) höher als eine zweite Referenzgeschwindigkeit ist.

7. Steuergerät nach Anspruch 1, wobei
die Bestimmungsbedingung ferner eine siebte Bedingung umfasst, dass Geschwindigkeitszustandsinformationen der anderen Fahrzeuge (2) Informationen sind, die angeben, dass eine Geschwindigkeit des anderen Fahrzeugs (2) niedriger als eine dritte Referenzgeschwindigkeit ist.

8. Steuergerät nach einem der Ansprüche 1 bis 7, wobei die Annäherungsunterdrückungsaktion eine Aktion ist, um die Zielpositionsbeziehung auf eine solche Positionsbeziehung einzustellen, dass sich das eigene Fahrzeug (1) weiter entfernt von dem vorausfahrenden Fahrzeug (2-4, 2-12) befindet, als in dem Fall, in dem die Bestimmungsbedingung nicht erfüllt ist.

9. Steuergerät nach einem der Ansprüche 1 bis 7, wobei die Annäherungsunterdrückungsaktion eine Aktion zum Reduzieren einer Beschleunigung ist, die für das eigene Fahrzeug (1) erzeugt wird, um niedriger als jene zu sein, falls die Bestimmungsbedingung nicht erfüllt ist.

10. Steuergerät nach einem der Ansprüche 1 bis 7, wobei die Annäherungsunterdrückungsaktion eine Aktion zum Reduzieren einer Änderungsrate der Beschleunigung ist, die für das eigene Fahrzeug (1) erzeugt wird, um niedriger als jene zu sein, falls die Bestimmungsbedingung nicht erfüllt ist.

11. Steuerungsverfahren zum Steuern des Verhaltens eines Spreizsitzfahrzeugs (1), wobei das Steuerungsverfahren Folgendes umfasst:
Ausführen einer Positionsbeziehungsanpassungsaktion durch einen Ausführungsabschnitt (22) eines Steuergeräts (20) zum automatischen Steuern einer Geschwindigkeit eines eigenen Fahrzeugs (1), so dass sich eine Positionsbeziehung zwischen dem eigenen Fahrzeug (1) und einem vorausfahrenden Fahrzeug (2-4, 2-12) einer Zielpositionsbeziehung nähert, wobei das vorausfahrende Fahrzeug (2-4, 2-12) in einer eigenen Fahrzeugspur (L2) fährt, wie eine Spur, in der das eigene Fahrzeug (1) fährt, wobei
der Ausführungsabschnitt (22) eine Annäherungsunterdrückungsaktion ausführt, um eine Annäherung des eigenen Fahrzeugs (1) an das vorausfahrende Fahrzeug (2-4, 2-12) zu unterdrücken, falls eine Bestimmungsbedingung in einer Situation erfüllt ist, in der die Positionsbeziehungsanpassungsaktion ausgeführt wird, während das eigene Fahrzeug (1) beschleunigt wird, und
die Bestimmungsbedingung eine erste Bedingung umfasst, dass mehrere andere Fahrzeuge (2) in einer angrenzenden Spur (L3) vorhanden sind, die an die eigene Fahrzeugspur (L2) angrenzt.

## Revendications

1. Dispositif de commande (20) qui est configuré pour commander le comportement d'un véhicule à enfourcher (1), le dispositif de commande comprenant :
une section d'exécution (22) qui exécute une action d'ajustement de relation de position pour commander automatiquement une vitesse d'un véhicule propre (1) de telle sorte qu'une relation de position entre le véhicule propre (1) et un véhicule précédent (2-4, 2-12) approche d'une relation de position cible, le véhicule précédent (2-4, 2-12) se déplaçant dans une voie de véhicule propre (L2) en tant que voie dans laquelle le véhicule propre (1) se déplace, dans lequel
la section d'exécution (22) exécute une action de suppression d'approche pour supprimer une approche du véhicule propre (1) vers le véhicule précédent (2-4, 2-12) dans le cas où une condition de détermination est satisfaite dans une situation où l'action d'ajustement de relation de position est exécutée pendant que le véhicule propre (1) accélère, et
la condition de détermination inclut une première condition selon laquelle plusieurs autres véhicules (2) existent dans une voie adjacente (L3) qui est adjacente à la voie du véhicule propre (L2).

2. Dispositif de commande selon la revendication 1, dans lequel
la condition de détermination inclut en outre une seconde condition selon laquelle des informations d'état de vitesse du véhicule propre (1) sont des informations indiquant que la vitesse du véhicule propre (1) est inférieure à une première vitesse de référence.

3. Dispositif de commande selon la revendication 2, dans lequel
la condition de détermination inclut en outre une troisième condition selon laquelle des informations d'état de différence de vitesse du véhicule propre (1) par rapport aux autres véhicules (2) sont des informations indiquant qu'une différence de vitesse du véhicule propre (1) par rapport à l'autre véhicule (2) est inférieure à une première différence de vitesse de référence.

4. Dispositif de commande selon la revendication 1, dans lequel
la condition de détermination inclut en outre une quatrième condition selon laquelle des informations d'état de différence de vitesse du véhicule propre (1) par rapport aux autres véhicules (2) sont des informations indiquant qu'une différence de vitesse du véhicule propre (1) par rapport à l'autre véhicule (2) est supérieure à une seconde différence de vitesse de référence.

5. Dispositif de commande selon la revendication 4, dans lequel
la condition de détermination inclut en outre une cinquième condition selon laquelle les informations d'état de différence de vitesse sont des informations indiquant que la différence de vitesse est inférieure à une troisième vitesse de référence qui est supérieure à la seconde différence de vitesse de référence.

6. Dispositif de commande selon la revendication 4, dans lequel
la condition de détermination inclut en outre une sixième condition selon laquelle des informations d'état de vitesse du véhicule propre (1) sont des informations indiquant que la vitesse du véhicule propre (1) est supérieure à une seconde vitesse de référence.

7. Dispositif de commande selon la revendication 1, dans lequel
la condition de détermination inclut en outre une septième condition selon laquelle des informations d'état de vitesse des autres véhicules (2) sont des informations indiquant qu'une vitesse de l'autre véhicule (2) est inférieure à une troisième vitesse de référence.

8. Dispositif de commande selon l'une quelconque des revendications 1 à 7, dans lequel
l'action de suppression d'approche est une action pour définir la relation de position cible sur une relation de position telle que le véhicule propre (1) est situé plus loin du véhicule précédent (2-4, 2-12) que dans le cas où la condition de détermination n'est pas satisfaite.

9. Dispositif de commande selon l'une quelconque des revendications 1 à 7, dans lequel
l'action de suppression d'approche est une action pour réduire une accélération générée pour le véhicule propre (1) de sorte qu'elle soit inférieure à celle dans le cas où la condition de détermination n'est pas satisfaite.

10. Dispositif de commande selon l'une quelconque des revendications 1 à 7, dans lequel
l'action de suppression d'approche est une action pour réduire un taux de changement d'accélération générée pour le véhicule propre (1) de sorte qu'il soit inférieur à celui dans le cas où la condition de détermination n'est pas satisfaite.

11. Procédé de commande pour commander le comportement d'un véhicule à enfourcher (1), le procédé de commande comprenant :
l'exécution d'une action d'ajustement de relation de position par une section d'exécution (22) d'un dispositif de commande (20) pour commander automatiquement une vitesse d'un véhicule propre (1) de telle sorte qu'une relation de position entre le véhicule propre (1) et un véhicule précédent (2-4, 2-12) approche d'une relation de position cible, le véhicule précédent (2-4, 2-12) se déplaçant dans une voie de véhicule propre (L2) en tant que voie dans laquelle le véhicule propre (1) se déplace, dans lequel
la section d'exécution (22) exécute une action de suppression d'approche pour supprimer une approche du véhicule propre (1) vers le véhicule précédent (2-4, 2-12) dans le cas où une condition de détermination est satisfaite dans une situation où l'action d'ajustement de relation de position est exécutée pendant que le véhicule propre (1) accélère, et
la condition de détermination inclut une première condition selon laquelle plusieurs autres véhicules (2) existent dans une voie adjacente (L3) qui est adjacente à la voie du véhicule propre (L2).
